# EUROPÄISCHE PATENTSCHRIFT

(11) **EP 2 440 429 B1**
(45) Veröffentlichungstag und Bekanntmachung des Hinweises auf die Patenterteilung: **27.02.2019**
(21) Anmeldenummer: 10724691.0
(22) Anmeldetag: 06.05.2010
(51) Int. Cl.: B60N 2/30

(54) **FAHRZEUGSITZ**
VEHICLE SEAT
SIÈGE DE VÉHICULE

(30) Priorität: 13.05.2009 DE 102009021211
(43) Veröffentlichungstag der Anmeldung: 18.04.2012
(73) Patentinhaber: Adient Luxembourg Holding S.à r.l., 1855 Luxembourg (LU)
(72) Erfinder: ABRAHAM, James, 51147 Köln (DE); ENGELS, Bernd, 42897 Remscheid (DE); SCHREIER, Johann, Dr., 52078 Aachen (DE); SZEGENY, Peter, 51371 Leverkusen (DE)
(74) Vertreter: Wolff, Felix
(86) Internationale Anmeldenummer: PCT/EP2010/002779
(87) Internationale Veröffentlichungsnummer: WO 2010/130369

(56) Entgegenhaltungen:
- DE-A1-102007 053 958
- DE-B3-102005 044 555
- DE-U1-202005 021 469
- DE-U1-202005 021 469
- US-A1- 2004 075 323
- US-A1- 2005 052 062

## Beschreibung

Die vorliegende Erfindung betrifft einen Fahrzeugsitz mit einem Sitzteil und einer Rückenlehne, die drehbar an dem Sitzteil vorgesehen ist, wobei das Sitzteil und die Rückenlehne in eine Easy-Entry-Stellung überführbar sind.

Derartige gattungsgemäße Fahrzeugsitze sind aus dem Stand der Technik hinlänglich bekannt, beispielsweise aus der Druckschriften US 2005/0052062 A1 die als nächstliegender Stand der Technik betrachtet wird, DE 10 2005 044555 B3, US 2004/075323 A1, DE 10 2007 053958 A1 und DE 20 2005 021469 U1. Neben der Easy-Entry-Stellung müssen Fahrzeugsitze aber auch oftmals in eine sogenannte "Flat-Fold-Stellung" überführbar sein, in der die Rückenlehne im Wesentlichen horizontal angeordnet ist. Die Flat-Fold-Position darf nur dann eingestellt werden, wenn sich der Fahrzeugsitz, insbesondere das Fahrzeugsitzteil nicht in der Easy-Entry-Stellung befindet. Oftmals ist es auch wünschenswert, dass die Rückenlehne nur dann in eine horizontale Lage überführt werden kann, wenn das Sitzteil von dem Sitzteilrahmen weggeschwenkt bzw. wenn das Sitzteil eines benachbarten Sitzes in diesen Sitzteil hinein geschwenkt worden ist. Um diese jeweiligen Funktionen zu blockieren bzw. freizugeben, waren bei Fahrzeugsitzen gemäß dem Stand der Technik eine Vielzahl von unterschiedlichen Antrieben oder mechanischen Bauteilen vonnöten, so dass diese Fahrzeugsitze vergleichsweise aufwendig aufgebaut waren.

Es war deshalb die Aufgabe der vorliegenden Erfindung, einen Fahrzeugsitz zur Verfügung zu stellen, der einfacher aufgebaut ist als die Fahrzeugsitze gemäß dem Stand der Technik.

Gelöst wird die Aufgabe mit einem Fahrzeugsitz gemäß Patentanspruch 1. Weitere vorteilhafte Ausführungsformen sind den Unteransprüchen zu entnehmen.

Die vorliegende Erfindung betrifft einen Fahrzeugsitz, der ein Sitzteil und eine Rückenlehne aufweist, wobei die Rückenlehne zu Komfortverstellzwecken, aber auch zur Überführung in eine Easy-Entry- und/oder in eine Flat-Fold-Position drehbar an dem Sitzteil vorgesehen ist. Bei dem Fahrzeugsitz kann es sich um jeden in einem Fahrzeug befindlichen Sitz handeln. Vorzugsweise ist der Fahrzeugsitz jedoch hinter dem Fahrer- bzw. Beifahrersitz angeordnet. Ganz besonders bevorzugt handelt es sich bei dem Fahrzeugsitz um eine Sitzbank, die mehreren Personen Platz bietet.

Erfindungsgemäß sind das Sitzteil und die Rückenlehne in eine Easy-Entry-Stellung überführbar, die die Belegung eines Fahrzeugsitzes, der sich hinter dem erfindungsgemäßen Fahrzeugsitz befindet, erleichtert. In der Easy-Entry-Stellung wird der Fahrzeugsitz aus seiner ursprünglichen Stellung in Fahrtrichtung nach vorne verschoben und die Rückenlehne um einen bestimmten Winkel, vorzugsweise 40° bis 50° aus der Vertikalen in Richtung des Fahrzeugsitzes geneigt. Nachdem die Person auf dem Sitz hinter dem erfindungsgemäßen Fahrzeugsitz Platz genommen hat, wird der Fahrzeugsitz aus seiner Easy-Entry-Stellung wieder in seine ursprüngliche Gebrauchsstellung zurückgeführt.

Der erfindungsgemäße Fahrzeugsitz weist in der Regel Mittel, insbesondere eine Ober- und eine Unterschiene, auf, entlang derer er zur Anpassung der Sitzstellung an den jeweiligen Fahrzeuginsassen, aber auch zur Überführung des Fahrzeugsitzes in die Easy-Entry-Stellung verschiebbar ist. Dabei ist die Oberschiene in der Regel an dem Fahrzeugsitz und die Unterschiene an der Karosserie des Fahrzeuges angeordnet. In der Regel ist der Bereich der Unterschiene, in dem sich der Fahrzeugsitz in seiner Easy-Entry-Stellung befindet, so ausgebildet, dass der Fahrzeugsitz aus Sicherheitsgründen diese Stellung im normalen Betrieb nicht einnehmen darf. Es sind an dem erfindungsgemäßen Fahrzeugsitz, an der Unterschiene und/oder der Karosserie demnach mindestens ein Blockierelement angeordnet, die eine Überführung des Fahrzeugsitzes in die Easy-Entry-Stellung verhindern, wenn dieser beispielsweise belegt ist, insbesondere wenn die Rückenlehne des Fahrzeugsitzes im Wesentlichen senkrecht gestellt ist. Dieses Blockierelement wird während oder nach der Überführung der Rückenlehne in die Easy-Entry-Stellung deaktiviert und während oder nach der Rückführung der Rückenlehne in die Gebrauchsstellung aktiviert.

Erfindungsgemäß weist der Fahrzeugsitz nun ein Betätigungselement auf, an dem ein Mittel zur Deaktivierung dieses Blockierelementes, das die Überführung des Sitzteils in die Easy-Entry-Stellung verhindert und an dem ein Mittel zur Begrenzung der Neigung der Rückenlehne in der Easy-Entry-Stellung angeordnet ist, auf. Durch dieses erfindungsgemäße Mittel wird verhindert, dass der Fahrzeugsitz in eine Easy-Entry-Stellung überführt wird, wenn die Rückenlehne sich nicht bereits in der Easy-Entry-Stellung oder in einer Easy-Entry-nahen Stellung befindet. Desweiteren wird vermieden, dass der Fahrzeugsitz über die Easy-Entry-Stellung hinaus in Richtung des Fahrzeugsitzes abgesenkt wird. Dadurch kann beispielsweise die Zerstörung von Gegenständen und/oder Personen, die sich noch auf dem Fahrzeugsitz befinden, vermieden werden. Vorzugsweise ist das Betätigungselement in Richtung des Sitzkissen, vorzugsweise in Richtung des Sitzkissen drehend, vorgespannt.

Vorzugweise ist das Betätigungselement mit der Rückenlehne verbunden und ganz bevorzugt wird das Betätigungselement von der Rückenlehne angetrieben. Durch diese bevorzugte Ausführungsform der vorliegenden Erfindung wird erreicht, dass beim Vorklappen der Rückenlehne in die Easy-Entry-Stellung die Blockade des Easy-Entry-Bereichs der Unterschiene im Wesentlichen gleichzeitig aufgehoben wird. Desweiteren wird mit dieser bevorzugten Ausführungsform der vorliegenden Erfindung sichergestellt, dass, sobald sich die Lehne in einer im Wesentlichen senkrechten Stellung befindet, das Blockierelement wieder aktiviert ist. Vorzugsweise weist der erfindungsgemäße Fahrzeugsitz in seinem Sitzteilbereich ein Sitzkissen auf, das das oben genannte Mittel zumindest zeitweise antreibt, d. h. insbesondere nach unten drückt, wenn sich das Sitzkissen in seiner Gebrauchsposition befindet, in der eine Person darauf sitzen kann. Dadurch ist sichergestellt, dass das Betätigungselement im Eingriff mit dem Blockierelement steht, wenn sich das Sitzkissen in Gebrauchsposition befindet.

Erfindungsgemäß ist das Mittel zur Deaktivierung des Blockierelementes eine Betätigungskontur, die formschlüssig mit einem Betätigungspin, das an dem Blockierelement vorgesehen ist, zusammenwirkt. Vorzugweise treibt das Betätigungsmittel beim Überführen der Rückenlehne von der Gebrauchs- in die Easy-Entry-Stellung einen Betätigungshebel an, der ein Arretiermittel, das den Fahrzeugsitz, beispielsweise die Oberschiene relativ zur Unterschiene, in seiner/ihrer jeweiligen Stellung relativ zur Karosserie arretiert, löst. Bei diesem Arretiermittel handelt es sich in der Regel um ein Mittel, das die Oberschiene relativ zur Unterschiene in der jeweils von dem Fahrzeuginsassen gewünschten Stellung arretiert. Um den Fahrzeugsitz in die Easy-Entry-Stellung zu überführen, muss dieses Arretiermittel gelöst werden. Dieses erfolgt vorzugweise mit dem oben genannten Mechanismus. Sobald der Fahrzeugsitz von der Easy-Entry-Stellung wieder in die ursprüngliche Stellung überführt worden ist, tritt diese Fixierung, beispielsweise der beiden Schienen relativ zueinander, wieder in Kraft.

Vorzugsweise begrenzt ein Anschlag die Bewegung des Betätigungshebels, um zu vermeiden, dass das Arretiermittel überbeansprucht wird.

In einer weiteren bevorzugten Ausführungsform der vorliegenden Erfindung ist die Rückenlehne zusätzlich in eine Flat-Fold-Stellung, in der sie sich im Wesentlichen in der Horizontalen befindet, überführbar.

Weiterhin bevorzugt ist das Sitzkissen von dem Sitzteilrahmen wegbewegbar, insbesondere wegschwenkbar, vorgesehen. Dabei weist der erfindungsgemäße Fahrzeugsitz vorzugsweise in seinem vorderen Bereich seines Sitzteils einen Drehmechanismus auf, um den das Fahrzeugsitzkissen von einer im Wesentlichen horizontalen in eine im Wesentlichen vertikale Stellung überführbar ist. In dieser vertikalen Stellung ist das Sitzkissen dann bevorzugt parallel mit der Rückenlehne eines sich davor befindlichen Fahrzeugsitzes ausgerichtet.

Weiterhin bevorzugt ist neben dem erfindungsgemäßen Sitz ein weiterer Fahrzeugsitz angeordnet. Dieser Fahrzeugsitz ist vorzugsweise schmaler ausgebildet als der zuerst genannte Sitz. Beispielsweise handelt es sich um eine 20/40 Teilung eines 60% Segmentes.

Vorzugsweise ist nun zumindest das Sitzkissen des weiteren, insbesondere schmaleren, Fahrzeugsitzes in den Bereich des Sitzteilrahmens, insbesondere zwischen dessen Seitenteile, schwenkbar vorgesehen. Dafür ist beispielsweise an dem Sitzteilrahmen, insbesondere an seinem dem weiteren Sitzteil zugewandten Seitenteil, ein Scharnier angeordnet, um das das Sitzteil des weiteren Fahrzeugsitzes in den Bereich des Sitzteilrahmens um im Wesentlichen 180° schwenkbar ist.

Weiterhin weist das erfindungsgemäß vorgesehene Betätigungselement eine Blockierkontur auf, die verhindert, dass die Rückenlehne in die Flat-Fold-Stellung überführbar ist, solange das Sitzkissen von dem Sitzrahmen nicht wegbewegt und/oder das benachbarte Sitzkissen nicht in dem Sitzrahmen angeordnet ist.

In einer weiteren bevorzugten Ausführungsform weist der erfindungsgemäße Fahrzeugsitz mindestens einen, vorzugsweise zwei Sensoren auf, mit denen feststellbar ist, in welcher Stellung sich das Sitzteil des erfindungsgemäßen Fahrzeugsitzes und/oder das Sitzteil des benachbarten Sitzes befindet.

Im Folgenden wird die Erfindung anhand der **Figuren 1 bis 9** erläutert. Diese Erläuterungen sind lediglich beispielhaft und schränken den allgemeinen Erfindungsgedanken nicht ein.
- **Figur 1**: zeigt eine Sitzbank.
- **Figur 2**: zeigt die Sitzteile der Sitzbank gemäß Figur 1.
- **Figur 3**: zeigt das Verstauen eines benachbarten Sitzteils im Bereich des Sitzrahmens.
- **Figur 4**: zeigt den erfindungsgemäßen Fahrzeugsitz in seiner Gebrauchsstellung.
- **Figur 5**: zeigt den Fahrzeugsitz gemäß Figur 4 bei der Überführung in die Easy-Entry-Stellung.
- **Figur 6**: zeigt den erfindungsgemäßen Fahrzeugsitz gemäß den Figuren 4 und 5 nach dem Wegschwenken des Sitzkissenteils.
- **Figur 7**: zeigt den Fahrzeugsitz gemäß Figur 6 in der Flat-Fold-Stellung.
- **Figur 8**: zeigt den erfindungsgemäßen Fahrzeugsitz vor der Anordnung des benachbarten Sitzkissenteils im Bereich des Sitzteilrahmens.
- **Figur 9**: zeigt den Fahrzeugsitz gemäß Figur 8 nach Überführung des benachbarten Sitzteils in den Sitzteilrahmen.

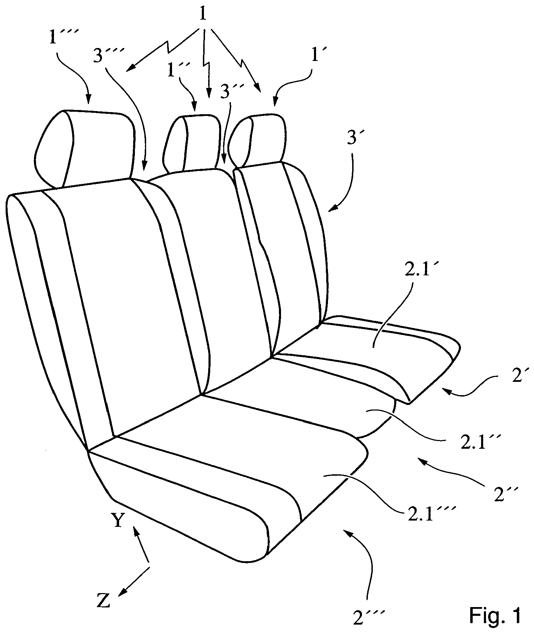

**Figur 1** zeigt einen Fahrzeugsitz 1' bis 1"' als Teil einer Rückbank, die in dem vorliegenden Fall aus drei Sitzen besteht. Jeder Fahrzeugsitz weist ein Sitzteil 2' bis 2'" und eine Rückenlehne 3' bis 3'" auf. Der Sitzteil jedes Fahrzeugsitzes weist ein Sitzkissen 2.1' bis 2.1'" auf.

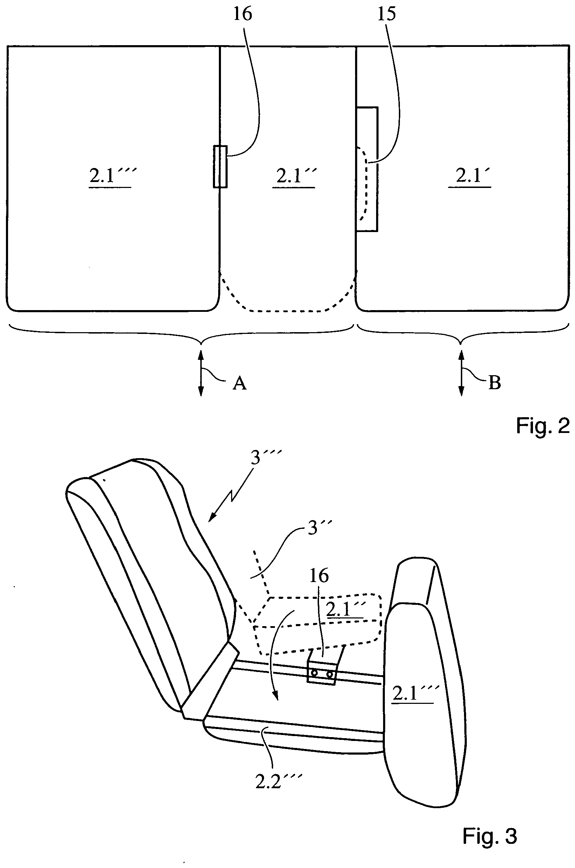

Wie insbesondere aus **Figur 2** zu erkennen ist, handelt es sich bei der Sitzbank gemäß Figur 1 um eine im Verhältnis 60/40 geteilte Rückbank, wobei der Teil A 60% und der Teil B 40% beträgt. Der Teil A besteht aus dem erfindungsgemäßen Fahrzeugsitz 1"' mit dem Sitzkissen 2.1"' sowie dem benachbarten Fahrzeugsitz 1" mit dem Sitzkissen 2.1". Das Sitzkissen 2.1" ist an dem Sitzteilrahmen 2.2'" des Sitzes 1"' mittels eines Scharniers 16 von der dargestellten Gebrauchs- in eine Verstauposition, in der sich das Sitzkissen 2.1" zwischen den Seitenteilen des Sitzteilrahmens 2.2'" befindet, schwenkbar gelagert. Die Schwenkbewegung ist durch den Pfeil symbolisiert. Auf der dem Scharnier gegenüberliegenden Seite weist der Sitz 1' an seinem Sitzteilrahmen 2.2' eine Auflage 15 auf, auf der sich das Sitzkissen 2.1" in seiner Gebrauchsposition abstützt.

Wie insbesondere in **Figur 3** zu sehen ist, ist das Sitzkissen 2.1'" um eine nicht dargestellte Drehachse, die sich im vorderen Bereich des Sitzteilrahmens 2.2'" befindet, von einer im Wesentlichen horizontalen Gebrauchsposition in eine im Wesentlichen vertikale Verstaustellung überführbar. Dadurch wird der Bereich des Sitzteilrahmens 2.2"', der sich unter oder im Bereich des Sitzkissens 2.1"' befindet, freigegeben, so dass das benachbarte Sitzkissen 2.1" und gegebenenfalls auch die Rückenlehne 3" in diesen Bereich um das Scharnier 16 geschwenkt werden können und somit verstaut sind.

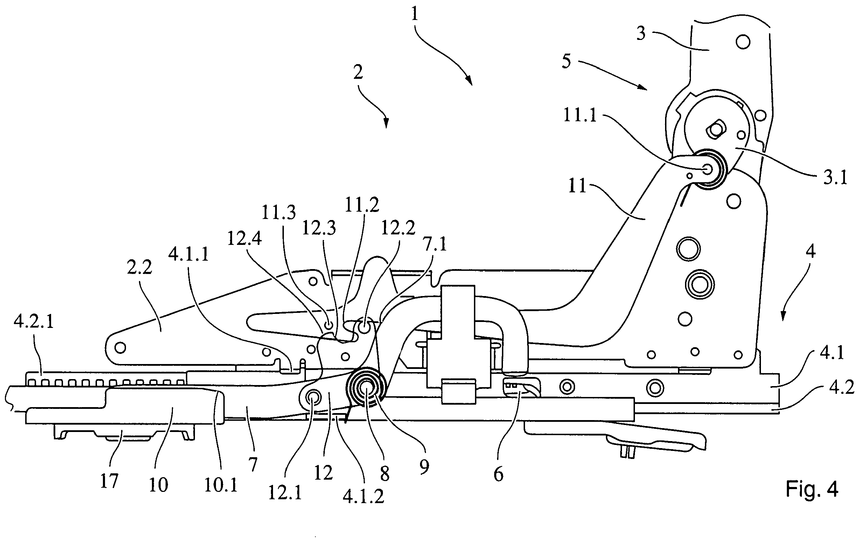

**Figur 4** zeigt den erfindungsgemäßen Fahrzeugsitz 1, wobei die Rückenlehne 3 nur teilweise dargestellt ist und das Sitzkissen aus Übersichtlichkeitsgründen weggelassen wurde. Der erfindungsgemäße Fahrzeugsitz ist vorzugsweise der in den Figuren 1 - 3 mit 1'" bezeichnete Fahrzeugsitz und besteht aus einem Sitzteil 2 und einer Rückenlehne 3, die um einen Recliner 5 drehbar an dem Sitzteil 2 angeordnet ist. Die Rückenlehne kann zu Komforteinstellungszwecken sowie zur Überführung in eine Easy-Entry- bzw. eine Flat-Fold-Position um den Recliner 5 verschwenkt werden. Der Sitzteilrahmen 2.2 des Sitzteils 2 ist fest mit einer Oberschiene 4.1 verbunden, die verschieblich entlang einer Unterschiene 4.2 angeordnet ist. Der Sitzteilrahmen 2.2 wird zur Einstellung der gewünschten Sitzposition, aber auch zur Überführung in die Easy-Entry-Position entlang der Unterschiene 4.2 verschoben. Um den Fahrzeugsitz in seiner gewünschten Position zu fixieren, ist an der Oberschiene 4.1 ein Arretiermittel 6, beispielsweise eine Klaue, angeordnet, die mit Ausnehmungen in der Unterschiene zusammenwirkt und die Oberschiene 4.1 an der Unterschiene 4.2 fixiert. Um diese Fixierung zur Einstellung der gewünschten Sitzposition zu lösen, weist der erfindungsgemäße Fahrzeugsitz einen Betätigungshebel 7 auf, der drehbar um das Drehgelenk 8 gelagert und vorzugsweise gegen den Uhrzeigersinn drehend vorgespannt ist. Wird dieser Hebel im Uhrzeigersinn verdreht, wird das Arretiermittel 6 gelöst und der Fahrzeugsitz kann zur Einstellung der gewünschten Sitzposition verschoben werden. Dabei ist jedoch zu vermeiden, dass der Sitz soweit nach links verschoben wird, dass sich die Oberschiene 4.1 im Easy-Entry-Bereich 4.2.1 der Unterschiene 4.2 befindet. Dafür weist der erfindungsgemäße Fahrzeugsitz ein Anschlagstück 12.1 auf, das mit einem Anschlag 10 zusammenwirkt und dadurch verhindert, dass der erfindungsgemäße Fahrzeugsitz zu weit nach links verschoben wird. Dieses Anschlagstück 12.1 ist Teil eines Blockierelementes 12, hier einer Blockierplatte, die ebenfalls drehbar um das Drehlager 8 an dem Sitzteilrahmen 2.2 gelagert und gegen den Uhrzeigersinn drehend gegen den Anschlag 4.1.2 vorgespannt ist. Die Blockierplatte und der Betätigungshebel können unabhängig voneinander bewegt, hier gedreht werden. Desweiteren weist dieses Blockierelement 12 einen Betätigungspin 12.2 auf. Ein weiterer Bestandteil des erfindungsgemäßen Fahrzeugsitzes ist das Betätigungselement 11. Dieses Betätigungselement 11 ist an seinem oberen rechten Ende mittels des Anlenkpunktes 11.1 an dem Beschlag 3.1 drehbar angeordnet. Der Beschlag 3.1 ist drehfest mit der Rückenlehne 3 verbunden. Das Betätigungselement ist mittels einer Feder in Richtung des Sitzkissenteils, d. h. in dem vorliegenden Fall im Uhrzeigersinn drehend, vorgespannt, wird aber auch von dem Sitzkissen (nicht dargestellt), sofern sich dieses im Bereich des Sitzteilrahmens, d.h. in seiner Gebrauchsposition, befindet, nach unten gedrückt. Diese Stellung ist in Figur 4 dargestellt. Des Weiteren weist das Betätigungselement 11 eine Betätigungskontur 11.2 sowie einen Blockierpin 11.3 auf. Die Betätigungskontur 11.2 gelangt mit dem Betätigungspinn 12.2 in Eingriff, während die Rückenlehne von ihrer vertikalen in die Easy-Entry-Stellung überführt wird.

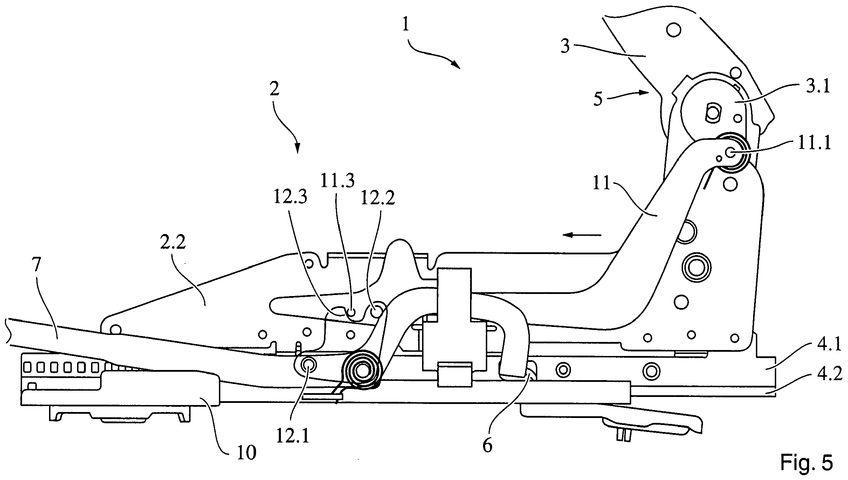

Diese Überführung der Rückenlehne in die Easy-Entry-Stellung ist in **Figur 5** dargestellt. Es ist zu erkennen, dass die Rückenlehne das Betätigungselement 11 nach rechts, in der durch den Pfeil dargestellten Richtung, bewegt. Dadurch gerät die Betätigungskontur 11.2 in Eingriff mit dem Betätigungspinn 12.2 und verdreht das Blockierelement 12 im Uhrzeigersinn um das Drehlager 8 und entgegen einer Federkraft, so dass sich das Blockierelement 12 nicht mehr an dem Anschlag 4.1.2 anliegt. Sobald der Betätigungspin 12.2 von dem Betätigungselement 11so weit bewegt worden ist, dass es den Betätigungshebel 7 berührt, verschwenkt der Betätigungspin 12.2 diesen im Uhrzeigersinn drehend um das Drehlager 8, wodurch der Betätigungshebel 7 die Arretierung 6 löst. Gleichzeitig mit dieser Drehung des Blockierelementes 12 wird das Anschlagstück 12.1 ebenfalls im Uhrzeigersinn verdreht, so dass sich dieses oberhalb des Anschlages 10 befindet und somit nicht mehr blockierend mit diesem zusammenwirken kann. Durch die Lösung des Arretiermittels 6 sowie die Überführung des Anschlagstücks 12.1 in die in Figur 5 dargestellte Position kann die Oberschiene 4.1 des erfindungsgemäßen Fahrzeugsitzes in den Easy-Entry-Bereich 4.2.1 der Unterschiene verschoben werden. Um sicherzustellen, dass bei dieser Bewegung das Anschlagstück 12.1 nicht an dem Anschlag 10 hängen bleibt, weist dieser in seinem rechten oberen Bereich eine Rampe 10.1 auf. Um zu vermeiden, dass die Rückenlehne 3 wieder in die Gebrauchsstelllung bewegt wird, weist das Betätigungselement 11 den Blockierpin 11.3 auf. Da der Blockierpin 11.3 mit der Betätigungskontur 12.3 des Blockierelementes 12 zusammenwirkt, wird dadurch auch eine Bewegung nach links , d. h. in Pfeilrichtung, des Betätigungselementes 11 verhindert. Sobald das Sitzteil wieder in seine Gebrauchsposition zurückgeschoben worden ist, kann sich das Blockierelement 12 wieder gegen den Uhrzeigersinn verdrehen und die Rückenlehne wieder aufrecht gestellt werden, und die gesamte oben geschilderte Bewegung wird beim Rückverschieben des Fahrzeugsitzes in seine Ursprungsposition (Figur 4) selbsttätig rückgängig gemacht.

Bei einer Komfortverstellung der Rückenlehne wird das Betätigungselement 11 nicht betätigt.

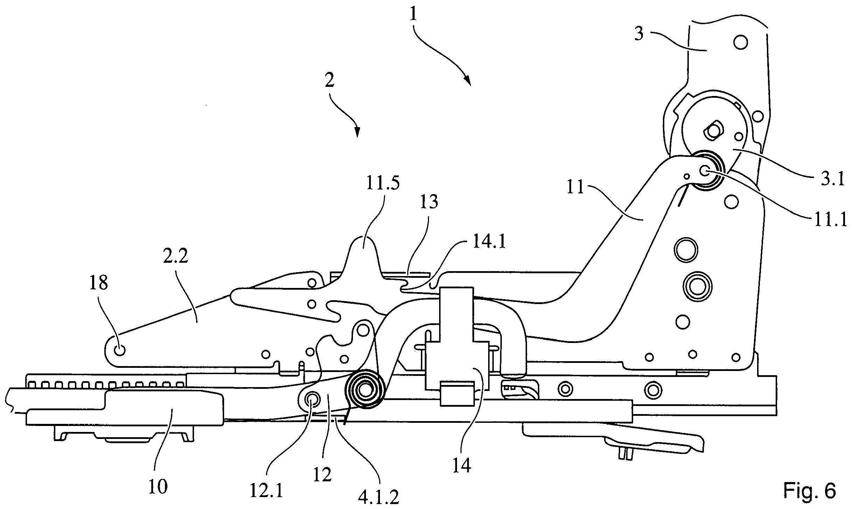

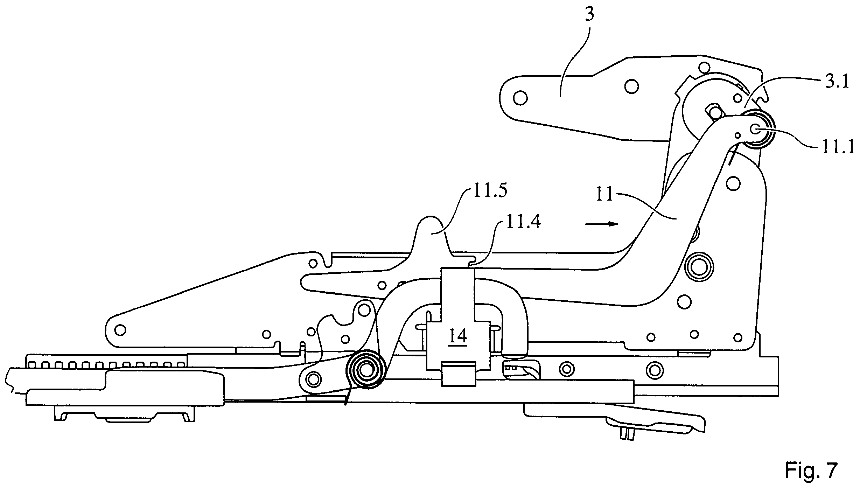

**Figur 6** zeigt den erfindungsgemäßen Fahrzeugsitz gemäß den Figuren 4 und 5. In dem vorliegenden Fall ist das Sitzkissen (nicht dargestellt) um ein Drehlager 18 von seiner horizontalen in eine vertikale Stellung überführt worden. Dadurch ist der Sitzkissensensor 11.5, der sich an dem Betätigungselement 11 befindet, nicht mehr im Eingriff mit dem Sitzkissen, und das im Uhrzeigersinn vorgespannte Betätigungselement 11 kann sich ein Stück im Uhrzeigersinn um den Anlenkpunkt 11.1 verdrehen, bis es mit dem Anschlag 13 zusammenwirkt. Dadurch gerät das Betätigungselement 11 außer Eingriff mit dem Blockierelement 12. Dies hat zur Folge, dass das gegen den Uhrzeigersinn drehend vorgespannte Blockierelement 12 an seinem Anschlag 4.1.2 anliegt und somit das Anschlagstück 12.1 so positioniert ist, dass es, wenn der Fahrzeugsitz nach links verlagert wird, mit dem Anschlag 10 in Eingriff gerät. Dadurch wird verhindert, dass der Fahrzeugsitz mit in die vertikale verschwenktem Sitzkissen in die Easy-Entry-Position gelangen kann. Dadurch, dass das Betätigungselement 11 nicht mehr mit dem Blockierelement 12 zusammenwirkt, ist auch im Prinzip die Drehbewegung der Rückenlehne über die Easy-Entry-Position in eine Flat-Fold-Position möglich. In dem vorliegenden Fall wird diese Überführung aber noch von dem Mittelkissensensor 14 blockiert, dessen oberes Ende mit einer Blockierkontur 11.4, die ebenfalls an dem Betätigungselement 11 vorgesehen ist, verhindert. Durch den Mittelkissensensor 14 soll verhindert werden, dass die Rückenlehne 3 in die Flat-Fold-Position überführt wird, bevor sich das benachbarte Sitzkissen 2.1" (vgl. Figuren 1 bis 3) im Bereich des Sitzteilrahmens 2.2 des hier dargestellten Sitzteils befindet. Sobald sich dieses Sitzteil 2.1" (nicht dargestellt) in dieser Stellung befindet, wird der Sitzkissensensor außerhalb des Wirkbereichs der Blockierkontur 11.4 aus der Papierebene heraus verschwenkt und das Betätigungselement kann so weit nach rechts, wie durch den Pfeil in Figur 7 dargestellt, verschoben werden, bis die Rückenlehne 3 die Flat-Fold-Stellung eingenommen hat, die in Figur 7 dargestellt ist.

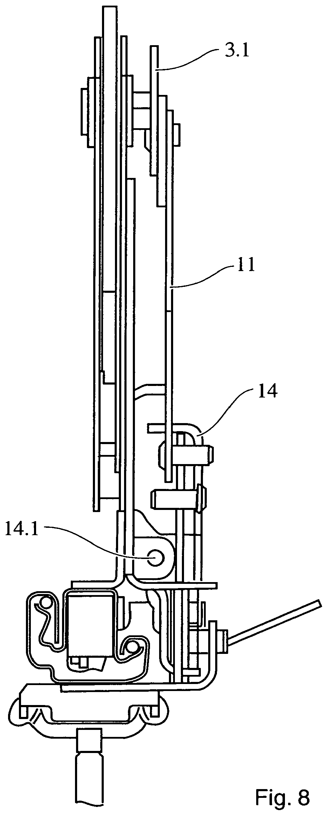

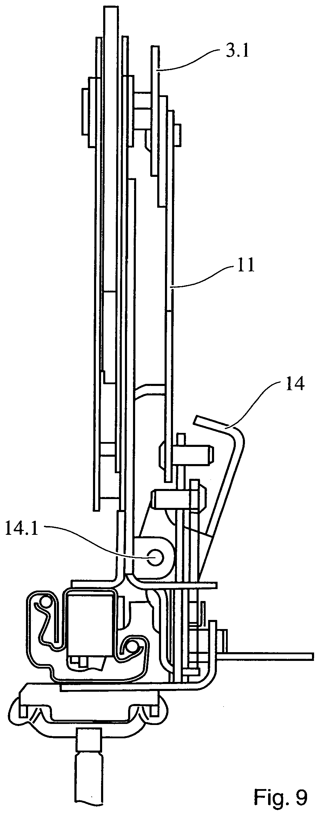

Die Verschwenkung des Mittelsitzkissensensors 14 ist insbesondere in den Figuren 8 und 9 zu sehen. In der Figur 8 befindet sich das Mittelsitzkissen nicht im Bereich des Sitzteilrahmens, so dass der Mittelsitzkissensensor 14 sich im Eingriff mit dem Betätigungselement 11 befindet. Sobald das Mittelsitzkissen jedoch in diesem Bereich angeordnet ist, wird der Sitzkissensensor 14, wie in Figur 9 dargestellt, im Uhrzeigersinn verschwenkt und ist somit nicht mehr im Wirkbereich des Betätigungselementes 11.

### Bezugszeichenliste:

- 1: Fahrzeugsitz
- 2: Sitzteil
- 2': erstes Sitzteilsegment
- 2": zweites Sitzteilsegment, mittleres Segment
- 2"': drittes Sitzteilsegment
- 2.1: Sitzkissen
- 2.1': erstes Sitzkissen
- 2.1": zweites Sitzkissen, mittleres Sitzkissen
- 2.1'": drittes Sitzkissen
- 2.2: Sitzteilrahmen
- 3: Rückenlehne
- 3': erstes Rückenlehnensegment
- 3": zweites Rückenlehnensegment
- 3'": drittes Rückenlehnensegment
- 3.1: Beschlag
- 4: Schiene
- 4.1: Oberschiene
- 4.1.1: Anschlag
- 4.1.2: Anschlag
- 4.2: Unterschiene
- 4.2.1: Easy-Entry-Bereich der Unterschiene
- 5: Recliner
- 6: Arretiermittel
- 7: Betätigungshebel
- 7.1: Rampe
- 8: Drehlager des Betätigungsmittels 7 und des Blockierelementes 12
- 9: Federmittel, Torsionsfeder
- 10: Anschlag
- 10.1: Rampe
- 11: Betätigungselement
- 11.1: Anlenkpunkt
- 11.2: Betätigungskontur
- 11.3: Blockierpin
- 11.4: Blockierkontur
- 11.5: Sitzkissensensor
- 12: Blockierelement
- 12.1: Anschlagsstück
- 12.2: Betätigungspin
- 12.3: Betätiungskontur
- 12.4: Blockierungskontur
- 13: Begrenzung
- 14: Mittelsitzkissensensor
- 15: Unterstützung
- 16: Scharnier
- 17: Karosserie
- 18: Drehgelenk

## Patentansprüche

1. Fahrzeugsitz (1) mit einem Sitzteil (2) und einer Rückenlehne (3), die drehbar an dem Sitzteil (2) vorgesehen ist, wobei das Sitzteil (2) und die Rückenlehne (3) in eine Easy-Entry-Stellung überführbar sind und wobei der Fahrzeugsitz ein Betätigungselement (11) aufweist, an dem eine Betätigungskontur (11.2) zur Deaktivierung eines Blockierelementes (12), das die Überführung des Sitzteils (2) in die Easy-Entry-Stellung verhindert, angeordnet ist, wobei an dem Betätigungselement (11) ein Mittel (11.3) zur Begrenzung der Neigung der Rückenlehne (3) in der Easy-Entry-Stellung angeordnet ist und **dadurch gekennzeichnet, dass** die Betätigungskontur (11.2) des Betätigungselements formschlüssig mit einem an dem Blockierelement (12) vorgesehenen Betätigungspin (12.2) zusammenwirkt.

2. Fahrzeugsitz nach Anspruch 1, **dadurch gekennzeichnet, dass** die Rückenlehne (3) das Betätigungselement (11) antreibt.

3. Fahrzeugsitz nach einem der voranstehenden Ansprüche, **dadurch gekennzeichnet, dass** er ein erstes Sitzkissen (2.1) aufweist, der das Betätigungselement (11) zumindest zeitweise antreibt.

4. Fahrzeugsitz nach Anspruch 1, **dadurch gekennzeichnet, dass** das Betätigungsmittel (12.2) beim Überführen der Rückenlehne von der Gebrauchs- in die Easy-Entry-Stellung einen Betätigungshebel (7) antreibt, der ein Arretiermittel (6), das den Fahrzeugsitz in seiner jeweiligen Stellung relativ zur Karosserie arretiert, löst.

5. Fahrzeugsitz nach Anspruch 4, **dadurch gekennzeichnet, dass** der Anschlag (4.1.1) die Bewegung des Betätigungshebels (7) begrenzt.

6. Fahrzeugsitz nach einem der voranstehenden Ansprüche, **dadurch gekennzeichnet, dass** die Rückenlehne (3) in eine Fold-Flat-Stellung überführbar ist.

7. Fahrzeugsitz nach Anspruch 3, **dadurch gekennzeichnet, dass** das erste Sitzkissen (2.1) von dem Sitzteilrahmen (2.2), wegbewegbar, insbesondere wegschwenkbar, ist.

8. Fahrzeugsitz nach Anspruch 7, **dadurch gekennzeichnet, dass** daneben ein weiterer Fahrzeugsitz (2") angeordnet ist.

9. Fahrzeugsitz nach einem der Ansprüche 7 oder 8, **dadurch gekennzeichnet, dass** ein zweites Sitzkissen (2.1 ") in den Bereich des Sitzteilrahmens (2.2) schwenkbar ist.

10. Fahrzeugsitz nach Anspruch 9, **dadurch gekennzeichnet, dass** das Betätigungselement (11) eine Blockierkontur (11.4) aufweist, die verhindert, dass die Rückenlehne (3) in Fold-Flat-Stellung überführbar ist, solange nicht das erste Sitzkissen (2.1) von dem Sitzrahmen (2.2) wegbewegt und/oder das zweite Sitzkissen (2.1") in dem Sitzrahmen (2.2) angeordnet ist.

11. Fahrzeugsitz nach einem der voranstehenden Ansprüche, **dadurch gekennzeichnet, dass** er einen Sitzkissensensor (11.5, 14) aufweist.

## Claims

1. Vehicle seat (1) with a seat part (2) and a backrest (3), which is provided rotatably on the seat part (2), wherein the seat part (2) and the backrest (3) can be transferred into an easy-entry position, and wherein an actuating contour the vehicle seat has an actuating element (11), on which (11.2) for deactivating a blocking element (12), which prevents the transfer of the seat part (2) into the easy-entry position, is arranged, wherein a means (11.3) for limiting the inclination of the backrest (3) in the easy-entry position is arranged on the actuating element (11) **characterized in that** the actuating contour (11.2) of the element actuating pin interacts in a form-fitting manner with an actuating (12.2) provided on the blocking element (12).

2. Vehicle seat according to Claim 1, **characterized in that** the backrest (3) drives the actuating element (11).

3. Vehicle seat according to either of the preceding claims, **characterized in that** it has a first seat cushion (2.1) which at least temporarily drives the actuating element (11).

4. Vehicle seat according to Claim 1, **characterized in that**, during the transfer of the backrest from the use position into the easy-entry position, the actuating means (12.2) drives an actuating lever (7) which releases a locking means (6) which locks the vehicle seat in the respective position thereof relative to the bodywork.

5. Vehicle seat according to Claim 4, **characterized in that** the stop (4.4.1) limits the movement of the actuating lever.

6. Vehicle seat according to one of the preceding claims, **characterized in that** the backrest (3) can be transferred into a fold-flat position.

7. Vehicle seat according to Claim 3, **characterized in that** the first seat cushion (2.1) can be moved away, in particular can be pivoted away, from the seat part frame (2.2).

8. Vehicle seat according to Claim 7, **characterized in that** a further vehicle seat (2") is arranged next thereto.

9. Vehicle seat according to either of Claims 7 and 8, **characterized in that** a second seat cushion (2.1") can be pivoted into the region of the seat part frame (2.2).

10. Vehicle seat according to Claim 9, **characterized in that** the actuating element (11) has a blocking contour (11.4) which prevents the backrest (3) from being able to be transferred into the fold-flat position if the first seat cushion (2.1) is not moved away from the seat frame (2.2) and/or the second seat cushion (2.1") is not arranged in the seat frame (2.2).

11. Vehicle seat according to one of the preceding claims, **characterized in that** it has a seat cushion sensor (11.5, 14).

## Revendications

1. Siège de véhicule (1) comprenant une partie d'assise (2) et un dossier (3) qui est prévu de manière rotative sur la partie d'assise (2), la partie d'assise (2) et le dossier (3) pouvant être amenés à une position d'entrée facile, et le siège de véhicule comprenant un élément d'actionnement (11) sur lequel est disposé un contour d'actionnement (11.2) servant à désactiver un élément de blocage (12) qui empêche le passage de la partie d'assise (2) à la position d'entrée facile, un moyen (11.3) servant à limiter l'inclinaison du dossier (3) dans la position d'entrée facile étant disposé sur l'élément d'actionnement (11), et **caractérisé en ce que** le contour d'actionnement (11.2) de l'élément d'actionnement coopère par complémentarité de forme avec une goupille d'actionnement (12.2) prévue sur l'élément de blocage (12).

2. Siège de véhicule selon la revendication 1, **caractérisé en ce que** le dossier (3) entraîne l'élément d'actionnement (11).

3. Siège de véhicule selon l'une quelconque des revendications précédentes, **caractérisé en ce qu'**il comprend un premier coussin de siège (2.1) qui entraîne au moins temporairement l'élément d'actionnement (11).

4. Siège de véhicule selon la revendication 1, **caractérisé en ce que** le moyen d'actionnement (12.2) entraîne un levier d'actionnement (7) lors du passage du dossier de la position d'utilisation à la position d'entrée facile, lequel levier d'actionnement relâche un moyen de verrouillage (6) qui verrouille le siège de véhicule dans sa position respective par rapport à la carrosserie.

5. Siège de véhicule selon la revendication 4, **caractérisé en ce que** la butée (4.1.1) limite le déplacement du levier d'actionnement (7).

6. Siège de véhicule selon l'une quelconque des revendications précédentes, **caractérisé en ce que** le dossier (3) peut être amené à une position rabattable à plat.

7. Siège de véhicule selon la revendication 3, **caractérisé en ce que** le premier coussin de siège (2.1) peut être écarté du cadre de partie d'assise (2.2), en particulier pivoté à l'écart de celui-ci.

8. Siège de véhicule selon la revendication 7, **caractérisé en ce qu'**un autre siège de véhicule (2") est par ailleurs prévu.

9. Siège de véhicule selon la revendication 7 ou 8, **caractérisé en ce qu'**un deuxième coussin de siège (2.1") peut être pivoté dans la région du cadre de partie d'assise (2.2).

10. Siège de véhicule selon la revendication 9, **caractérisé en ce que** l'élément d'actionnement (11) comprend un contour de blocage (11.4) qui empêche le passage du dossier (3) à la position rabattable à plat tant que le premier coussin de siège (2.1) n'est pas écarté du cadre de siège (2.2) et/ou tant que le deuxième coussin de siège (2.1") n'est pas disposé dans le cadre de siège (2.2) .

11. Siège de véhicule selon l'une quelconque des revendications précédentes, **caractérisé en ce qu'**il comprend un premier capteur de coussin de siège (11.5, 14).
